# FASCICULE DE BREVET EUROPEEN

(11) **EP 1 194 305 B1**
(45) Date de publication et mention de la délivrance du brevet: **08.10.2008**
(21) Numéro de dépôt: 00938682.2
(22) Date de dépôt: 25.05.2000
(51) Int. Cl.: B60C 25/00

(54) **PROCEDE DE DEMONTAGE D'UN PNEUMATIQUE SUR JANTE A SIEGES INCLINES VERS L'EXTERIEUR**
VERFAHREN ZUM DEMONTIEREN EINES REIFENS VON EINER FELGE MIT NACH AUSSEN ABLAUFENDEN SITZEN
METHOD FOR CHANGING A TYRE ON A WHEEL RIM WITH OUTWARD SLANTING SEATS

(30) Priorité: 21.06.1999 FR 9907881
(43) Date de publication de la demande: 10.04.2002
(73) Titulaire: Société de Technologie Michelin, 63040 Clermont-Ferrand Cedex 09 (FR); Michelin Recherche et Technique S.A., 1763 Granges-Paccot (CH)
(72) Inventeur: EYNARD, Claude, F-63530 Chanat-la-Mouteyre (FR)
(74) Mandataire: Diernaz, Christian
(86) Numéro de dépôt international: PCT/EP2000/004769
(87) Numéro de publication internationale: WO 2000/078567

(56) Documents cités:
- WO-A-95/33628
- DE-C- 3 910 807
- FR-A- 2 320 200

## Description

La présente invention a pour objet une méthode de démontage de sa jante de service d'un ensemble formé d'une part d'un pneumatique à armature de carcasse radiale et d'autre part d'un anneau de soutien de bande de roulement amovible, et plus particulièrement d'un ensemble destiné à être monté sur une jante monobloc dont au moins un des sièges est incliné vers l'extérieur.

Comme décrite dans les brevets français FR 2 699 121, FR 2 713 557 et FR 2 713 558, une telle jante ayant, vue en section méridienne, un premier siège dont l'extrémité axialement extérieure est sur un cercle de diamètre inférieur au diamètre du cercle sur lequel se trouve l'extrémité axialement intérieure (un tel siège est dit incliné vers l'extérieur), une portée plus ou moins grande destinée à recevoir un anneau de soutien de bande de roulement amovible, éventuellement une gorge de montage, et un deuxième siège de jante, soit identique, soit différent du premier siège de jante, forme avec un pneumatique dont le profil méridien d'armature de carcasse et dont la forme des bourrelets sont adaptés, et avec un appui de soutien amovible un ensemble roulant performant dans le cas d'un roulage à faible pression ou même à pression nulle.

Le brevet FR 2 720 977 décrit une méthode de montage d'un pneumatique, comprenant un premier bourrelet et un deuxième bourrelet, et de l'appui de soutien amovible qui l'accompagne, sur une jante de montage monobloc, comprenant un premier et un deuxième sièges de jante, au moins le premier siège de jante étant incliné vers l'extérieur, prolongé axialement à l'extérieur par une saillie de faible hauteur, et réuni axialement à l'intérieur à une portée destinée à recevoir l'appui de soutien de bande de roulement.

Ledit procédé de montage consiste :
- à introduire, en premier lieu, l'appui de soutien à l'intérieur du pneumatique, puis
- à présenter sur la jante le deuxième bourrelet du côté opposé au deuxième siège de jante, puis à le faire passer sur la portée de jante à l'aide de moyens de mise en place, enfin
- à effectuer ensuite les dernières étapes du montage, les dites dernières étapes étant différentes selon les particularités de la jante de montage.

Si le diamètre nominal du deuxième siège de jante est supérieur à celui du premier siège, et dans le cas d'un appui de largeur inférieure à la distance axiale séparant les parois intérieures des deux bourrelets, le montage est facile et l'emploi éventuel de leviers de montage pour sortir de son siège le deuxième bourrelet, du fait des faibles efforts imposés, n'entraîne aucune conséquence sur l'intégrité du pneumatique. A l'inverse, le démontage d'un tel ensemble pneumatique-appui est une suite d'opérations dont l'une d'elles nécessite l'utilisation de leviers de démontage : pendant la phase où il faut faire passer le premier bourrelet ou bourrelet extérieur hors de son siège par-dessus la saillie ou hump qui forme le bord extérieur de jante. Ladite opération manuelle exige au moins deux leviers de démontage et entraîne deux inconvénients majeurs :
- la détérioration de la jante de montage par pression intense des leviers sur la saillie, détérioration d'autant plus importante que la roue est en alliage léger,
- la détérioration du bourrelet considéré, par éclatement et/ou coupure du caoutchouc formant la couche extérieure de protection située radialement sous la tringle d'ancrage d'armature de carcasse, ledit éclatement faisant suite à un pincement dudit caoutchouc entre tringle et siège de jante, pouvant permettre à l'air et/ou humidité de cheminer dans le flanc du pneumatique par l'intermédiaire des éléments de renforcement de l'armature de carcasse et ainsi provoquer des décollements entre les dits éléments et le calandrage jusqu'à mise hors service du pneumatique.

Remédier à de tels inconvénients nécessite au moins l'utilisation d'un seul levier de démontage et préférentiellement la suppression pure et simple du recours à de tels leviers, en profitant de l'opportunité que l'ensemble roulant comporte effectivement un appui de soutien de bande de roulement.

Afin de procéder au démontage du pneumatique, comprenant un premier bourrelet et un deuxième bourrelet, et de l'appui de soutien qui lui est intérieur, de la jante de montage monobloc, comprenant un premier et un deuxième sièges de jante, au moins le premier siège de jante étant incliné vers l'extérieur, prolongé axialement à l'extérieur par une saillie de faible hauteur, et réuni axialement à l'intérieur à une portée destinée à recevoir l'appui de soutien de bande de roulement, la méthode de démontage, conforme à l'invention, consiste :
- à faire pivoter sur son siège le premier bourrelet autour de son talon, par rouletage par au moins un galet tournant appuyant sur ledit bourrelet, de manière à créer un interstice entre la pointe dudit bourrelet et le siège de jante, puis
- à lubrifier l'interstice ainsi créé,
- à introduire dans le dit interstice un insert de démontage I sous forme de portion d'anneau circulaire à section méridienne triangulaire, dont la hauteur est au moins égale à la hauteur radiale de la saillie du bord de jante considéré,
- à utiliser ledit insert pour éjecter hors de la jante de montage le premier bourrelet et l'ensemble formé du pneumatique et de l'appui de soutien de bande de roulement.

La dernière étape du procédé de démontage ci-dessus peut être réalisée de plusieurs manières et à l'aide de moyens différents. Si la machine de montage et démontage utilisée comporte un ou des galets tournants dits presseurs de chaque côté de l'ensemble pneumatique-roue, on exerce une poussée sur le deuxième bourrelet, dans la direction de l'axe de rotation de l'ensemble et au moyen d'un galet tournant, ladite poussée délogeant ledit deuxième bourrelet de son siège de jante et se transmettant par l'intermédiaire de l'appui de soutien au premier bourrelet en permettant le délogement du dit premier bourrelet hors de son siège. Le démontage est achevé en continuant la poussée jusqu'à évacuation complète de l'ensemble du pneumatique et de l'appui.

Le procédé ci-dessus est parfaitement adapté à une machine de montage munie d'au moins deux galets presseurs, un de chaque côté de l'ensemble pneumatique-roue. Certaines machines ne possèdent qu'un galet presseur, situé d'un seul côté de l'ensemble. Que ce soit une machine à plateaux tournants horizontaux ou une machine à axe de révolution horizontal, il est alors nécessaire de prévoir une étape supplémentaire dans le procédé de démontage, étape consistant simplement, après mise de l'insert de démontage entre le premier bourrelet et la jante, de retourner l'ensemble pneumatique-roue sur la machine, de sorte que le galet tournant puisse exercer une force de pression sur le deuxième bourrelet.

Il est possible que certaines machines de montage et démontage possèdent un ou des galets ne pouvant pas exercer une poussée suffisante pour déloger de son siège le premier bourrelet. Il est alors avantageux de faire appel à un levier de montage pour déloger ledit bourrelet, et un tel emploi s'accompagne de l'utilisation d'un insert de démontage pourvu d'une encoche d'insertion de levier et d'une languette de protection de jante.

L'insert de démontage peut être en matériau plastique tel que le polyéthylène, le polyuréthanne ou autre plastique connu. Il peut être aussi en matériau élastomérique de dureté Shore A suffisante, comprise entre 60 et 95 points.

La longueur préférentielle de l'insert plastique sera comprise entre 0,25 et 0,40 fois la longueur circonférentielle du siège de bourrelet mesurée à son extrémité axialement extérieure. Si ladite longueur est inférieure à 0,25 fois la longueur circonférentielle du siège, l'insert est inefficace ; il en est de même si la longueur est supérieure à 0,40 fois la longueur circonférentielle du siège, car cette longueur trop élevée entraîne un trop fort serrage du pneu sur la jante, armée de l'insert.

L'invention est illustrée par le dessin annexé à la description, montrant les différentes étapes de montage dans le cas de plusieurs jantes de montage, dessin sur lequel :
* les figures 1A à 1H montrent les différentes étapes du procédé,
* la figure 2 est une figure agrandie en section méridienne de l'insert de démontage monté sur le siège de jante,
* la figure 3 montre les extrémités d'une variante préférentielle d'insert de démontage,
* la figure 4 montre une variante préférentielle d'insert utilisé avec un levier de montage.

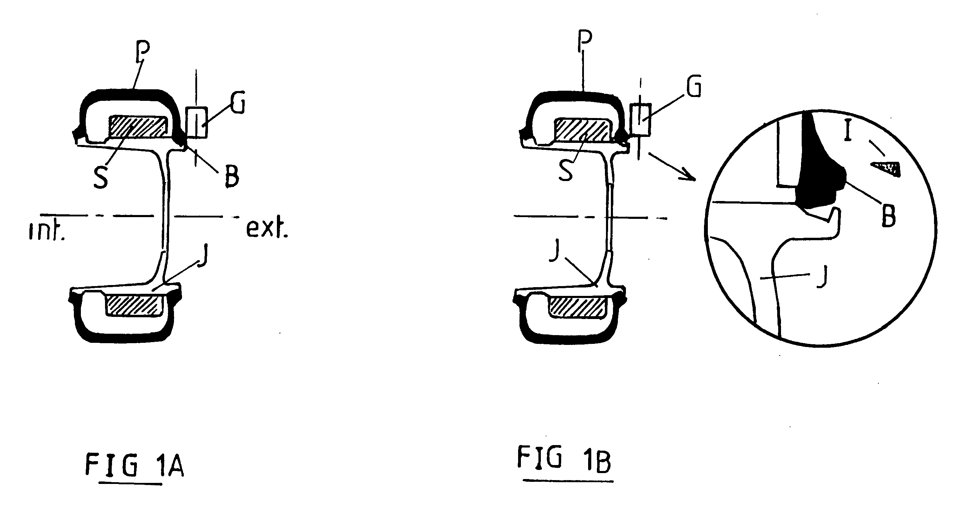

L'ensemble roulant, comme montré sur la figure 1A, comprend principalement une jante J, un pneumatique P et un appui de soutien S de bande de roulement. La jante J comprend fondamentalement deux sièges de jante inclinés vers l'extérieur (l'extrémité axialement extérieure dudit siège se trouvant sur un cercle de diamètre plus petit que le cercle sur lequel se trouve l'extrémité axialement intérieure), l'un des sièges, dans l'exemple montré, le siège situé du côté intérieur du véhicule et dit siège intérieur ou deuxième siège, a un diamètre (diamètre du cercle sur lequel se trouve l'extrémité axialement intérieure) plus grand que le diamètre de l'autre siège, dit siège extérieur ou premier siège. Il faut entendre par direction axiale la direction de l'axe de rotation de l'ensemble. Ledit siège extérieur est prolongé axialement par une portée sur laquelle sera enfilé l'appui S, la dite portée étant elle-même prolongée par une gorge de montage, elle-même réunie au deuxième siège de jante par l'intermédiaire d'un rebord.

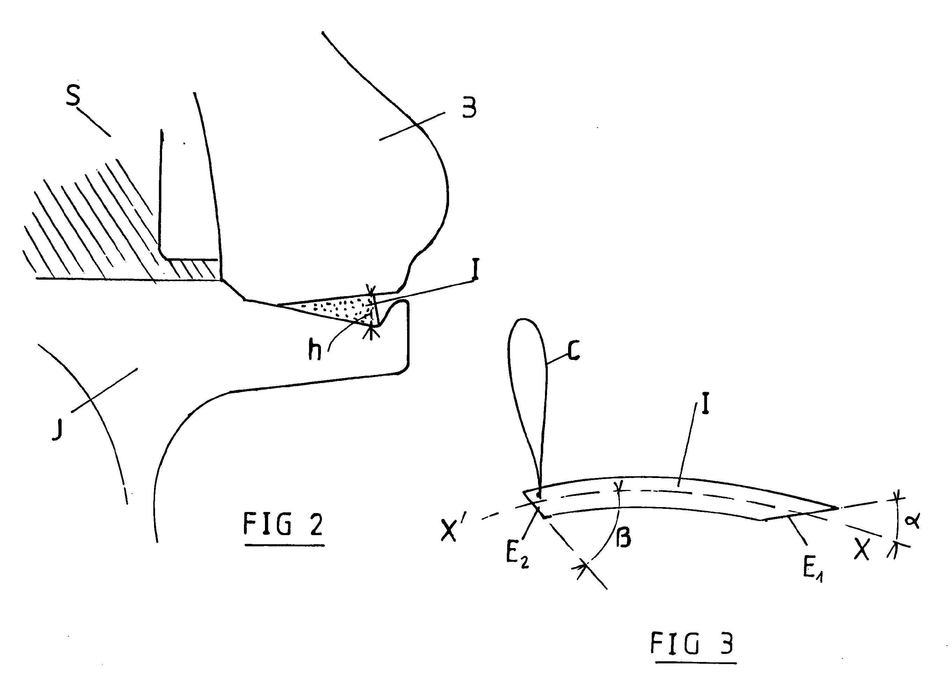

L'opération de démontage commence (figure 1A) par le rouletage du premier bourrelet B ou bourrelet extérieur, au moyen d'au moins un galet tournant G₁, ce qui induit un pivotement dudit bourrelet autour de son talon (partie du bourrelet axialement à l'intérieur) et la création d'un interstice entre le siège de jante et la pointe du bourrelet, interstice nécessaire pour la lubrification du dessous de la pointe de bourrelet et la mise en place (figure 1B) d'un insert I de démontage. Ledit insert I est une portion circonférentielle, de longueur égale à environ 30% de la longueur circonférentielle intérieure, d'un anneau circulaire en plastique souple (polyamide), et dont la section transversale est un triangle sensiblement rectangle de faibles dimensions (figure 2). La paroi dont la génératrice est l'hypoténuse d'un tel triangle est la face qui sera en contact avec la paroi tronconique du siège de jante, alors que les deux autres parois correspondant aux côtés de l'angle droit seront, en ce qui concerne le côté le plus grand, en contact avec la paroi tronconique du siège de bourrelet et, en ce qui concerne le côté le plus petit, en contact avec la paroi intérieur de la saillie du bord de jante. La hauteur radiale h de l'insert, abaissée, perpendiculairement à l'axe de rotation, du point d'intersection des deux côtés d'angle droit sur l'hypoténuse, est égale ou très légèrement supérieure à la hauteur h_{S} de la saillie du bord de jante, hauteur mesurée entre l'extrémité axialement extérieure du siège de jante et la parallèle à l'axe de rotation menée du sommet de la saillie.

La forme préférentielle de la section méridienne de l'insert étant triangulaire, les extrémités circonférentielles dudit insert sont biseautées (figure 3) : pour une insertion plus aisée, l'extrémité E₁ qui pénétrera la première dans l'interstice crée par la pression du galet G₁, sera biseautée avec un angle α, part rapport à la ligne moyenne XX' de l'insert, compris entrez 15 et 70° ; pour un maintien en place plus sur, la deuxième extrémité E₂ sera biseautée d'un angle β différent de 90° et inférieur à 70°.

Lors de la translation simultanée du pneumatique et de l'appui de soutien hors de la jante J, l'insert I peut malencontreusement se glisser parfois entre ledit appui et la portée sur lequel est posé l'appui, empêchant la sortie rapide de l'ensemble pneumatique-appui. L'insert I est préférentiellement muni d'un cordon de dégagement C utile pour récupérer l'insert (figure 3).

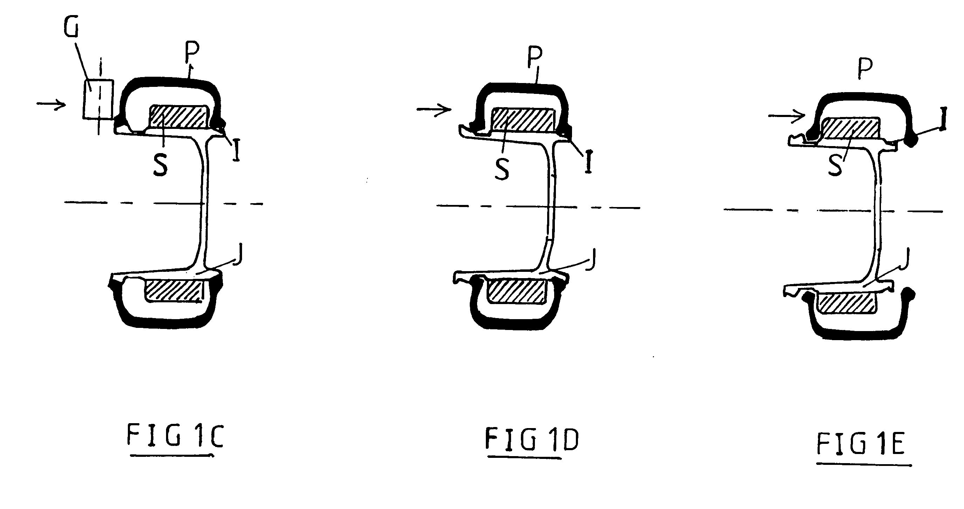

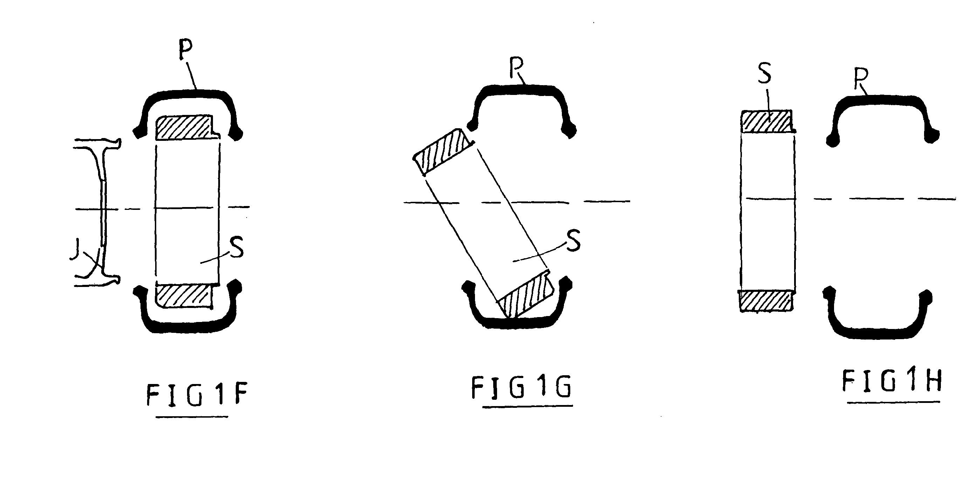

Dans le cas d'une machine de montage et démontage à au moins deux galets presseurs et ledit insert I étant en place, on exerce une poussée axiale sur le deuxième bourrelet ou bourrelet intérieur (figure 1C) toujours par l'intermédiaire d'un galet tournant G₂, de manière à déloger ledit bourrelet intérieur de son siège (figure 1D) et à la faire tomber dans la gorge de montage de la jante J. Ladite poussée est exercée tout d'abord à l'emplacement circonférentiel opposé à l'emplacement circonférentiel de l'insert sous le premier bourrelet. On continue à exercer ladite poussée par avancement axial du galet G₂, poussée qui, par l'intermédiaire du deuxième bourrelet et de l'appui de soutien S, se translate sur le premier bourrelet et provoque le délogement dudit premier bourrelet ou bourrelet extérieur (figure 1 E) hors de son siège et par-dessus la saillie du bord de jante, opération qui est rendue facile par la présence de l'insert I dont la hauteur est au moins égale à celle de la saillie. La poussée axiale est alors prolongée ensuite jusqu'à enlèvement complet du pneumatique et de l'appui de soutien de bande de roulement (figure 1F). Il reste alors à enlever l'appui de soutien S hors du pneumatique (figure 1G) pour obtenir tous les éléments de l'ensemble séparés (figure 1 H).

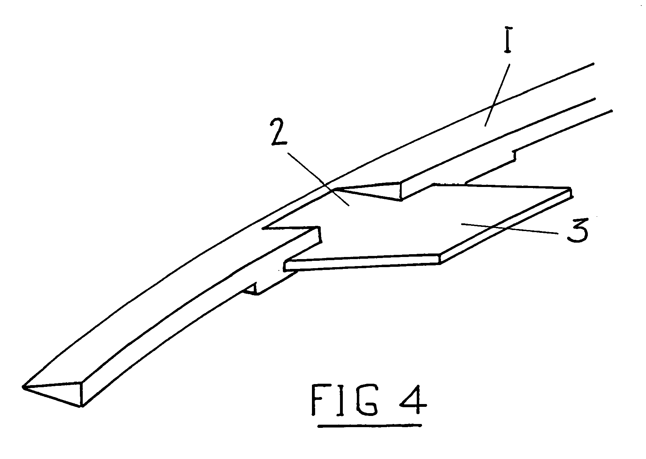

Dans le cas d'une machine de montage et démontage n'autorisant pas une pression suffisante sur le premier bourrelet, il est possible d'insérer dans le procédé une étape supplémentaire : après création de l'interstice nécessaire, ladite étape consiste à utiliser un seul levier de démontage pour sortir de la jante J le premier bourrelet. L'insert I utilisé (figure 4) est alors, approximativement en son milieu, pourvu d'une encoche 2 ou rainure radiale, destinée à permettre l'engagement de la tête de levier sans endommager le bourrelet. L'encoche 2 est prolongée latéralement par une languette plate 3 de faible épaisseur destinée à la protection de la jante lors de la manipulation du levier de montage. Une surépaisseur 4 de matière est présente sur la face de l'insert I devant entrer en contact avec la jante sur une longueur circonférentielle supérieure à la longueur L de l'encoche, de manière à renforcer la partie d'insert fragilisée par la présence de l'encoche 2. Comme auparavant, la suite du procédé, dans ce cas, consiste soit à exercer une poussée sur le deuxième bourrelet jusqu'à évacuation totale de l'ensemble pneumatique-appui, soit à retourner dans un premier temps le pneumatique et la jante de montage sur la machine de démontage et à éjecter l'ensemble.

## Revendications

1. Procédé de démontage d'un pneumatique P, comprenant un premier bourrelet et un deuxième bourrelet, et de l'appui de soutien S qui lui est intérieur, de la jante de montage monobloc J, comprenant un premier et un deuxième sièges de jante, les dits deux sièges de jante étant inclinés vers l'extérieur et le premier siège étant prolongé axialement à l'extérieur par une saillie de faible hauteur, et réuni axialement à l'intérieur à une portée destinée à recevoir l'appui de soutien S de bande de roulement, **caractérisé en ce que**
- l'on fait pivoter sur son siège le premier bourrelet B₁ autour de son talon, par rouletage par au moins un galet tournant G₁ appuyant sur ledit bourrelet, de manière à créer un interstice entre la pointe dudit bourrelet et le siège de jante, puis
- l'on lubrifie l'interstice ainsi créé,
- l'on introduit dans le dit interstice un insert de démontage I, sous forme de portion d'anneau circulaire à section méridienne triangulaire, dont la hauteur h est au moins égale à la hauteur radiale h_{S} de la saillie du bord de jante considéré,
- à utiliser ledit insert I pour éjecter hors de la jante de montage J le premier bourrelet B₁ et l'ensemble formé du pneumatique P et de l'appui de soutien S de bande de roulement.

2. Procédé selon la revendication 1, applicable dans le cas d'une machine de montage et démontage comportant un ou des galets tournants dits presseurs (G₁, G₂) de chaque côté de l'ensemble pneumatique-roue, **caractérisé en ce** la dernière étape du procédé consiste à exercer une poussée sur le deuxième bourrelet B₂, dans la direction de l'axe de rotation de l'ensemble et au moyen d'un galet tournant G₂, ladite poussée délogeant ledit deuxième bourrelet B₂ de son siège de jante et se transmettant par l'intermédiaire de l'appui de soutien S au premier bourrelet B₁ en permettant le délogement du dit premier bourrelet hors de son siège.

3. Procédé selon la revendication 1, applicable dans le cas d'une machine de montage et démontage comportant un ou des galets tournants dits presseurs G₁ d'un seul côté de l'ensemble pneumatique-roue, **caractérisé en ce que**, après mise de l'insert de démontage I entre le premier bourrelet B₁ et la jante J, on retourne l'ensemble pneumatique-roue sur la machine, de sorte que le galet tournant G₁ puisse exercer une force de pression sur le deuxième bourrelet B₂.

4. Procédé selon l'une des revendications 2 à 3, **caractérisé en ce que**, après mise d'un insert de démontage I entre le premier bourrelet B₁ et la jante J, ledit insert étant pourvu d'une encoche (2) d'insertion de levier et d'une languette de protection (3) de jante, on éjecte le premier bourrelet B₁ à l'aide d'un levier de démontage.

5. Procédé selon la revendication 1, **caractérisé en ce que** l'on utilise un insert I en matériau plastique.

6. Procédé selon la revendication 1, **caractérisé en ce que** l'on utilise un insert I de longueur circonférentielle comprise entre 0,25 et 0,40 fois la longueur circonférentielle du siège de bourrelet mesurée à son extrémité axialement extérieure.

7. Procédé selon la revendication 6, **caractérisé en ce que** l'insert I utilisé a des extrémités E₁ et E₂ circonférentielles biseautées.

8. Procédé de démontage d'un pneumatique P comprenant un premier bourrelet et un deuxième bourrelet, de la jante de montage monobloc J, comprenant un premier et un deuxième sièges de jante, les dits deux sièges de jante étant inclinés vers l'extérieur et le premier siège étant prolongé axialement à l'extérieur par une saillie de faible hauteur, ce procédé comprenant les étapes suivantes :
- on fait pivoter sur son siège le premier bourrelet B₁ autour de son talon, par rouletage par au moins un galet tournant G₁ appuyant sur ledit bourrelet, de manière à créer un interstice entre la pointe dudit bourrelet et le siège de jante, puis
- on lubrifie l'interstice ainsi créé,
- on introduit dans ledit interstice un insert de démontage I, sous forme de portion d'anneau circulaire à section méridienne triangulaire, dont la hauteur h est au moins égale à la hauteur radiale hₛ de la saillie du bord de jante considéré, ledit insert de démontage I comprenant une encoche (2) et une languette de protection (3) de jante,
- on introduit un levier de démontage dans l'encoche entre l'insert et le bourrelet du pneumatique pour éjecter hors de la jante de montage J le premier bourrelet B₁ et le pneumatique P.

## Claims

1. Method of removing a tyre P, comprising a first bead and a second bead, and the support S inside it, from the one-piece mounting rim J, comprising a first and a second rim seat, the said two rim seats being outwardly tapered and the first seat being extended axially towards the exterior by an upstand of small height and connected axially toward the interior to a land intended to accommodate the tread support S, **characterized in that**:
- the first bead B₁ is pivoted on its seat about its heel by rollering using at least one rotating roller G₁ pressing against the said bead, so as to create a gap between the toe of the said bead and the rim seat, then
- the gap thus created is lubricated,
- a removal insert I is inserted into the said gap, this insert being in the form of a portion of a circular annulus of triangular meridian section, the height h of which is at least equal to the radial height hₛ of the upstand of the rim lip in question,
- the said insert I is used to eject the first bead B₁ and the assembly formed of the tyre P and of the tread support S from the mounting rim J.

2. Method according to Claim 1 which can be applied to the case of a tyre fitting and removing machine comprising one or more rotating rollers known as press rollers (G₁, G₂) on each side of the tyre-wheel assembly, **characterized in that** the final step in the method is to apply pressure to the second bead B₂ in the direction of the axis of rotation of the assembly and using a rotary roller G₂, the said pressure dislodging the said second bead B₂ from its rim seat and being transmitted via the support S to the first bead B₁ allowing the said first bead to be dislodged from its seat.

3. Method according to Claim 1 which can be applied to the case of a tyre fitting and removing machine comprising one or more rotary rollers known as press rollers G₁ on just one side of the tyre-wheel assembly, **characterized in that**, once the removal insert I has been fitted between the first bead B₁ and the rim J, the tyre-wheel assembly is turned around on the machine so that the rotary roller G₁ can apply pressure to the second bead B₂.

4. Method according to one of Claims 2 to 3,
**characterized in that**, after fitting a removal insert I between the first bead B₁ and the rim J, the said insert being provided with a cutout (2) for inserting a lever and with a tab (3) to protect the rim, the first bead B₁ is ejected, using a tyre lever.

5. Method according to Claim 1, **characterized in that** use is made of an insert I made of plastic.

6. Method according to Claim 1, **characterized in that** use is made of an insert I of a circumferential length ranging between 0.25 and 0.40 times the circumferential length of the bead seat measured at its axially exterior end.

7. Method according to Claim 6, **characterized in that** the insert I used has chamfered circumferential ends E₁ and E₂.

8. Method of removing a tyre P, comprising a first bead and a second bead, from the one-piece mounting rim J, comprising a first and a second rim seat, the said two rim seats being outwardly tapered and the first seat being extended axially towards the exterior by an upstand of small height, this method comprising the following steps:
- the first bead B₁ is pivoted on its seat about its heel by rollering using at least one rotating roller G₁ pressing against the said bead, so as to create a gap between the toe of the said bead and the rim seat, then
- the gap thus created is lubricated,
- a removal insert I is inserted into the said gap, this insert being in the form of a portion of a circular annulus of triangular meridian section, the height h of which is at least equal to the radial height hₛ of the upstand of the rim lip in question, the said removal insert I comprising a cutout (2) and a tag (3) to protect the rim,
- a tyre lever is inserted into the cutout between the insert and the bead of the tyre in order to eject the first bead B₁ and the tyre P from the mounting rim J.

## Patentansprüche

1. Verfahren zum Demontieren eines Reifens P, der einen ersten Wulst und einen zweiten Wulst enthält, und einer Stützauflage S, die sich in ihm befindet, von der Monoblock-Montagefelge J, die einen ersten und einen zweiten Felgensitz aufweist, wobei die zwei Felgensitze nach außen geneigt sind und der erste Sitz durch einen Vorsprung mit geringer Höhe axial auswärts verlängert ist und axial einwärts mit einem Bereich vereinigt ist, der dazu vorgesehen ist, die Stützauflage S der Laufbahn aufzunehmen,
**dadurch gekennzeichnet, dass**
- der erste Wulst (B₁) an seinem Sitz um seinen Wulstkern durch Abrollen mittels wenigstens einer drehbaren Rolle (G₁), die sich an dem Wulst abstützt, geschwenkt wird, derart, dass zwischen der Spitze des Wulstes und dem Felgensitz ein Zwischenraum erzeugt wird, anschließend
- der somit erzeugte Zwischenraum geschmiert wird,
- in diesen Zwischenraum ein Demontageeinsatz I in Form eines kreisförmigen Ringabschnitts mit dreieckigem Meridianquerschnitt, dessen Höhe h wenigstens gleich der radialen Höhe h_{S} des Vorsprungs des betrachteten Felgenrandes ist, eingesetzt wird,
- der Einsatz I verwendet wird, um aus der Montagefelge J den ersten Wulst B₁ und die Gesamtheit, die aus dem Reifen P und der Stützauflage S der Lauffläche gebildet ist, auszuwerfen.

2. Verfahren nach Anspruch 1, das in dem Fall einer Montage- und Demontagemaschine, die ein oder mehrere drehbare Rollen, so genannte Drücker (G₁, G₂), auf jeder Seite der Reifen/Rad-Gesamtheit enthält, anwendbar ist, **dadurch gekennzeichnet, dass** der erste Schritt des Verfahrens darin besteht, auf den zweiten Wulst (B₂) in Richtung der Drehachse der Gesamtheit und mittels einer drehbaren Rolle (G₂) einen Schub auszuüben, wobei der Schub den zweiten Wulst (B₂) von seinem Felgensitz ablöst und über die Stützauflage S an den ersten Wulst (B₁) übertragen wird, wodurch die Ablösung des ersten Wulstes von seinem Sitz ermöglicht wird.

3. Verfahren nach Anspruch 1, das in dem Fall einer Montage- und Demontagemaschine, die ein oder mehrere drehbare Rollen, so genannte Drücker G₁, auf einer einzigen Seite der Reifen/Rad-Gesamtheit enthält, anwendbar ist, **dadurch gekennzeichnet, dass** nach dem Anbringen des Demontageeinsatzes I zwischen dem ersten Wulst B₁ und der Felge J die Reifen/Rad-Gesamtheit an der Maschine umgedreht wird, derart, dass die drehbare Rolle G₁ eine Druckkraft auf den zweiten Wulst B₂ ausüben kann.

4. Verfahren nach einem der Ansprüche 2 bis 3, **dadurch gekennzeichnet, dass** nach dem Anbringen des Demontageeinsatzes I zwischen dem ersten Wulst B₁ und der Felge J, wobei der Einsatz mit einer Nut (2) zum Einsetzen eines Hebels und mit einer Schutzlasche (3) für die Felge versehen ist, der erste Wulst B₁ mit Hilfe eines Demontagehebels ausgeworfen wird.

5. Verfahren nach Anspruch 1, **dadurch gekennzeichnet, dass** ein Einsatz I aus Kunststoff verwendet wird.

6. Verfahren nach Anspruch 1, **dadurch gekennzeichnet, dass** ein Einsatz I mit einer Umfangslänge im Bereich der 0,2- bis 0,40-fachen Umfangslänge des Wulstsitzes, gemessen an seinem axial äußeren Ende, verwendet wird.

7. Verfahren nach Anspruch 6, **dadurch gekennzeichnet, dass** der verwendete Einsatz I abgefaste Umfangsenden E₁ und E₂ besitzt.

8. Verfahren zum Demontieren eines Reifens P, der einen ersten Wulst und einen zweiten Wulst enthält, von der Monoblock-Montagefelge J, die einen ersten und einen zweiten Felgensitz aufweist, wobei die zwei Felgensitze nach außen geneigt sind und der erste Sitz axial auswärts durch einen Vorsprung mit geringer Höhe verlängert ist, wobei das Verfahren die folgenden Schritte enthält:
- Schwenken des ersten Wulstes B₁ an seinem Sitz um seinen Wulstkern durch Abrollen wenigstens einer drehbaren Rolle G₁, die sich an dem Wulstkern abstützt, derart, dass zwischen der Spitze des Wulstes und dem Felgensitz ein Zwischenraum erzeugt wird, anschließend
- Schmieren des somit erzeugten Zwischenraums,
- Einsetzen eines Demontageeinsatzes I in Form eines kreisförmigen Ringabschnitts mit dreieckigem Meridianquerschnitt, dessen Höhe h wenigstens gleich der radialen Höhe hₛ des Vorsprungs des betrachteten Felgenrandes ist, in den Zwischenraum, wobei der Demontageeinsatz I eine Nut (2) und eine Schutzlasche (3) für die Felge aufweist,
- Einführen eines Demontagehebels in die Nut zwischen dem Einsatz und dem Wulst des Reifens, um den ersten Wulstkern B₁ und den Reifen P aus der Montagefelge J auszuwerfen.
